# EUROPÄISCHE PATENTANMELDUNG

(11) **EP 0 843 973 A2**
(43) Veröffentlichungstag der Anmeldung: **27.05.1998**
(21) Anmeldenummer: 97114509.9
(22) Anmeldetag: 22.08.1997
(51) Int. Cl.: A23L 1/31, A22C 11/00

(54) **Verfahren zur Herstellung von fleischhaltigen Esswaren in Form kleinportionierter Würstchen oder Röllchen**

(30) Priorität: 21.11.1996 DE 19648116
(71) Anmelder: Pews, Harry, 47051 Duisburg (DE)
(72) Erfinder: Pews, Harry, 47051 Duisburg (DE)
(74) Vertreter: Röther, Peter, Dipl.-Phys.

(57) **Zusammenfassung**

Bei einem Verfahren zur Herstellung von fleischhaltigen Esswaren in Form kleinportionierter Würstchen oder Röllchen, insbesondere für den Zwischendurchverzehr, ist erfindungsgemäß vorgesehen, daß der Fleischanteil zunächst von Fett befreit und in Stücke geschnitten wird und sodann feinkörnig gecuttert wird, wobei die Masse des Fleischanteils insgesamt mehr als 50 % der Gesamtmasse ausmacht. Danach werden feinzerkleinerte pflanzliche Anteile beigemischt. Beigemischt werden ebenfalls Gewürze und/oder mineralische Anteile. Danach wird die so entstandene Masse portioniert, bei Temperaturen zwischen 5 und 10° C angetrocknet und anschließend warmgeräuchert.

## Beschreibung

Die Erfindung betrifft ein Verfahren zur Herstellung von fleischhaltigen Esswaren in Form von kleinportionierten Würstchen oder Röllchen, insbesondere für den Zwischendurchverzehr.

Derartige Würstchen sind in Form von Minisalamis bzw. Bockwürstchen bekannt. Diese Würstchen bestehen in der Hauptsache aus Fleisch- und Fettanteilen, denen Gewürze und Geschmacksverstärker bzw. Farbstoffe zugemischt werden. Diese Würstchen sind sogenannte Snacks, die zwischen den Mahlzeiten, zum Bier, auf Reisen oder Wanderungen verzehrt werden. Im Hinblick darauf, daß der Verbraucher mehr und mehr dazu übergeht, tierische Fette zu meiden, auf seinen Cholesterinspiegel achtet und insbesondere darauf, daß gerade in den industriell hergestellten Esswaren möglichst wenig an chemischen Bestandteilen enthalten ist, wird nach Alternativen Ausschau gehalten, die zum einen fettreduziert sind, in ihrer Konsistenz jedoch den gewohnten Würstchen entsprechen, dazu wohlschmeckend sind und über einen vom üblichen abweichenden Geschmack verfügen.

Der Erfindung liegt daher die Aufgabe zugrunde, ein Verfahren der eingangs genannten Art so zu führen, daß ein Produkt entsteht, bei dem auf den Zusatz tierischer Fette soweit wie möglich verzichtet und dieser Anteil durch andersartige Grundprodukte ersetzt wird.

Die Erfindung löst diese Aufgabe dadurch, daß zunächst der Fleischanteil feinkörnig gecuttert wird, wobei die Masse des Fleischanteils insgesamt mehr als 50 % der Gesamtmasse ausmacht, daß dem gecutterten Fleischanteil feinstzerkleinerte pflanzliche Anteile beigemischt werden, daß dieser Mischung Gewürze und/oder mineralische Anteile beigemischt werden, wobei dieser Anteil vorzugsweise signifikant unter 5 % des Gesamtanteils liegen soll. Im weiteren Verfahrensverlauf wird das Gemisch portioniert, entweder indem es in verzehrbare Hüllen gefüllt wird, wobei diese Hüllen vorzugsweise Saitlinge sind. Oder aber die Gesamtmasse wird zu Röllchen portioniert. Die Würstchen werden nach dem Abfüllvorgang kurz abgebrüht, sodann längere Zeit angetrocknet, und zwar bei Temperaturen zwischen 5 und 10° C, wonach im Anschluß die Würstchen warmgeräuchert werden, um sie haltbar zu machen.

Die portionierten Röllchen werden ebenfalls längere Zeit angetrocknet, und zwar bei den gleichen Temperaturen wie oben und im Anschluß daran ebenfalls warmgeräuchert.

Die Abbrühzeit der Würstchen beträgt vorzugsweise 4 min und die Zeit des Warmräucherns sowohl der Würstchen als auch der Röllchen 6 bis 8 Stunden.

Auf diese Weise erhält man Produkte, bei denen der Fleischanteil zwar überwiegt, die signifikant hohe Menge an pflanzlichen Anteilen jedoch den eigentlichen Geschmack bestimmt, und die über einen extrem minimierten Fettanteil verfügen.

Eine bevorzugte Verfahrensvariante liegt darin, daß als pflanzliche Anteile Früchte, insbesondere Südfrüchte wie Ananas, Bananen oder ähnliche verwendet werden.

Hierbei hat der Erfinder jedoch festgestellt, daß bloßes Beimischen dieser Früchte im Rohzustand nicht zum gewünschten Ergebnis führt.

Daher werden erfindungsgemäß zwei Hauptverfahrensvarianten vorgeschlagen.

Ein überraschend überdurchschnittliches Produkt gelingt nach einer ersten Verfahrensvariante dann, wenn gemäß den Ansprüchen 2 und 5 die Fleischanteile in halbgefrorenem Zustand gecuttert werden und neben den feinzerkleinerten Früchten Fruchtsaft in gefrorenem Zustand beigemischt und mitgecuttert wird.

Hierbei ist ein bevorzugtes Verhältnis von Früchten und Fruchtsaft 1 : 3.

Es ist jedoch auch möglich, statt Frucht und Fruchtsaft getrocknete und feingemahlene Früchte, beispielsweise Bananen zuzumischen.

So ergibt sich ein fruchtig schmeckendes Produkt, wenn einem Fleischgemisch aus Kalb- und Putenfleisch pürierter Ananas in einer der Kalbfleischmenge entsprechenden Menge und gefrorener Ananassaft im Verhältnis 1 : 3 zum Ananasfruchtanteil gecuttert und gemischt werden.

In beiden Fällen ergibt sich eine homogene Wurstmasse, die im fertigen portionierten Zustand die gewohnte Konsistenz und Bissfestigkeit ergibt.

Bei der zweiten Hauptverfahrensvariante gemäß den Ansprüchen 3 und 7 werden die Fleischanteile gekocht und in noch heißem Zustand zu einer Paste gecuttert, danach werden die Früchte gekocht, vom Saft getrennt und in noch heißem Zustand gecuttert und in der Fleischpaste untergemischt und anschließend der heiße Fruchtsaft zusammen mit Gelantine in die Fleisch-Fruchtmasse eingemischt.

Mit Hilfe dieses Verfahrens werden bevorzugt Röllchen, ähnlich Cevapcici-Röllchen, hergestellt, die auch ohne in verzehrbare Hüllen gefüllt zu werden, die gewünschte und gewohnte Konsistenz und Bissfestigkeit aufweisen.

Statt des Frucht-Fruchtsaftanteils können gemäß Anspruch 8 die pflanzlichen Anteile auch aus getrockneten und frischen Früchten im Verhältnis von 1 : 1 bestehen.

Eine weitere Variante sieht vor, daß die pflanzlichen Anteile aus gemahlenen Gewürzschoten, beispielsweise Chilischoten bestehen, wobei jedoch in diesem Fall aus geschmacklichen Gründen der Anteil dieser pflanzlichen Produkte gemessen am Fleischanteil geringer ist als bei den vorgenannten Beispielen.

Das trifft auch auf eine weitere Variante zu, bei der als pflanzliche Bestandteile gemahlene Nusskerne bzw. nussähnliche Kerne verwendet werden. Es kann sich hierbei um gemahlene Walnüsse bzw. gemahlene Pistazien oder um ein Gemisch von beiden handeln, wobei im letztgenannten Fall das Mischverhältnis 1 : 1 ist.

Die Varianten mit Nusskernen bzw. nussähnlichen Kernen oder mit gemahlenen Gewürzschoten bezieht sich auf beide Hauptverfahrensvarianten.

Allen Varianten gemeinsam ist jedoch der verschwindend geringe Anteil an tierischen Fetten, an künstlichen Geschmacksverstärkern und an sonstigen belastenden chemischen Bestandteilen.

Die Erfindung wird im folgenden anhand von mehreren Beispielen spezifiziert.
- Beispiel 1:: Zwei Teile Kalbfleisch und ein Teil Putenfleisch werden feingecuttert. Ein Anteil von 30 % frischer Ananas und 10 % gefrorenem Ananassaft, der mitgecuttert wird, werden beigemischt. Dieser Mischung wird Traubenzucker mit einem Anteil weniger als 1 % der Gesamtmasse und Nitrid in einem Anteil von weniger als 2 % zugesetzt.
- Beispiel 2:: Wie Beispiel 1, jedoch wird hier der Ananas-/Ananassaftanteil durch feingemahlene getrocknete Bananen ersetzt, die einen Anteil von etwa 40 % der Gesamtmasse ausmachen.
- Beispiel 3:: Zwei Teile Schweinefleisch und ein Teil Rindfleisch werden gecuttert. Gemahlene Chilischote wird beigefügt, wobei der Anteil an gemahlener Chilischote zwischen 2 und 3 % der Gesamtmasse liegt. Diesem Gemisch wird Kochsalz, Nitrid, Kardamom und Kümmel in einer Gesamtmenge zugegeben, die in etwa der Menge des gemahlenen Chilis entspricht.
- Beispiel 4:: Entspricht Beispiel 3, wobei bei diesem Beispiel gemahlene Walnüsse und gemahlene Pistazien im Verhältnis von 1 zu 1 zugegeben werden, wobei die Gesamtmasse der gemahlenen Bestandteile bei etwa 30 % der Gesamtmasse liegt. Allerdings wird hier auf den Zusatz von Kardamom verzichtet.

Nachdem die aus den Beispielen hervorgehenden Gemische portionsweise in 25-er bzw. 26-er Saitlinge abgefüllt worden sind, werden diese Würstchen gemäß Anspruch 7 ein bis zwei Tage im Kühlhaus bei vorzugsweise 6 bis 8° C angetrocknet, wodurch zum einen ein gewisser Reifeprozeß bewirkt wird und zum anderen ein vorzeitiges Verderben der zuvor abgebrühten Produkte verhindert wird.
- Beispiel 5:: Zwei Teile Putenfleisch und ein Teil Schweinefleisch werden vom Fett befreit, in Stück geschnitten und mit Dampf gegart, wodurch der Fettgehalt nochmals verringert wird. Im heißen Zustand wird das Fleisch zu einer Paste gecuttert. Durch das Cuttern im heißen Zustand wird die Klebrigkeit und damit die Bindung noch verstärkt. Die Früchte (Pfirsiche, Ananas etc.) werden ebenfalls gekocht und vom Saft getrennt und dann ebenfalls gecuttert. Die Fruchtmasse wird in die Fleischmasse im heißen Zustand untergearbeitet. Danach wird der Fruchtsaft zusammen mit der Gelantine ebenfalls im heißen Zustand untergemischt, wodurch die nötige Festigkeit hergestellt wird. Die so entstandene Masse wird portioniert, beispielsweise als Würstchen oder Röllchen. Die Würstchen werden danach abgebrüht, getrocknet (etwa 2 Tage) und dann drei bis vier Stunden warmgeräuchert.

Die Röllchen werden angetrocknet (ebenfalls etwa 2 Tage) und dann drei bis vier Stunden geräuchert. Die Röllchen können zu mehreren auf Spieße gesteckt werden.
- Beispiel 6:: Wie Beispiel 5, jedoch wird hier Frucht-Fruchtsaftanteil durch eine Masse aus frischen und getrockneten Bananen im Verhältnis 1 : 1 ersetzt.
- Beispiel 7:: Wie Beispiel 5. Hier werden jedoch zwei Teile Schweinefleisch und ein Teil Rindfleisch beigemischt. Der pflanzliche Anteil besteht hier lediglich aus Walnüssen, Pistazien etc.
- Beispiel 8:: Wie Beispiel 7. Jedoch sind hier die Walnüsse bzw. Pistazien durch feinzermahlene Chilischoten ersetzt.

Die zugesetzten Mengen an Nusskernen bzw. nussähnlichen Kernen und Chilischoten liegen etwa in dem Rahmen wie in den Beispielen 3 und 4 beschrieben.

Um die durch Warmräuchern für einen ausreichenden Zeitraum haltbar gemachten Produkte noch haltbarer zu machen und eine hygienische Lagerung zu gewährleisten, werden die Produkte entweder einzeln oder zu mehreren zusammen vakuumverpackt, somit sie bequem zu transportieren sind, auch zu mehreren im Rucksack beispielsweise. Die Einzelportionen bleiben appetitlich, können mit dem restlichen Inhalt beispielsweise des Rucksacks nicht in Berührung kommen und sind so portioniert, daß sie auch lediglich bei kleinem Hunger ohne Rest verzehrt werden können.

## Patentansprüche

1. Verfahren zur Herstellung von fleischhaltigen Esswaren in Form kleinportionierter Würstchen oder Röllchen, insbesondere für den Zwischendurchverzehr, mit den Verfahrensschritten:
a) feinkörniges Cuttern des von Fett befreiten und in Stücke geschnittenen Fleischanteils bzw. der Fleischanteile, wobei die Masse der Fleischanteile insgesamt mehr als 50 % der Gesamtmasse ausmacht,
b) Feinzerkleinern und Beimischen pflanzlicher Anteile,
c) Beimischen von Gewürzen und/oder mineralischen Anteilen,
d) Portionieren des Gemisches aus a) bis c),
e) Antrocknen der Portionen bei Temperaturen zwischen 5 und 10° C
f) Warmräuchern der Portionen.

2. Verfahren nach Anspruch 1,
dadurch gekennzeichnet,
daß die Fleischanteile in halbgefrorenem Zustand gecuttert werden.

3. Verfahren nach Anspruch 1,
dadurch gekennzeichnet,
daß die Fleischanteile gekocht und in noch heißem Zustand zu einer Paste gecuttert werden.

4. Verfahren nach einem der Ansprüche 1 bis 3,
dadurch gekennzeichnet,
daß die pflanzlichen Anteile Früchte sind.

5. Verfahren nach den Ansprüchen 1, 2 und 4,
dadurch gekennzeichnet,
daß neben den feinzerkleinerten Früchten Fruchstsaft in gefrorenem Zustand beigemischt und mitgecuttert wird.

6. Verfahren Anspruch 5,
dadurch gekennzeichnet,
daß Früchte und Fruchtsaft im Verhältnis 1 : 3 stehen.

7. Verfahren nach den Ansprüchen 1, 3 und 4,
dadurch gekennzeichnet,
daß die Früchte gekocht, vom Saft getrennt und in noch heißem Zustand gecuttert und in der Fleischpaste untergemischt werden und anschließend der heiße Fruchtsaft zusammen mit Gelantine in die Fleisch-/Fruchtmasse eingemischt wird.

8. Verfahren nach einem der Ansprüche 1 bis 4,
dadurch gekennzeichnet,
daß die pflanzlichen Anteile aus getrockneten und frischen Früchten im Verhältnis 1 : 1 bestehen.

9. Verfahren nach einem der Ansprüche 1 bis 3,
dadurch gekennzeichnet,
daß die pflanzlichen Anteile getrocknete und gemahlene Gewürzschoten sind, die im Verhältnis von etwa 1 : 1 zu der Gesamtheit der restlichen Gewürze stehen.

10. Verfahren nach einem der Ansprüche 1 bis 3,
dadurch gekennzeichnet,
daß die pflanzlichen Anteile gemahlene Nusskerne bzw. nussähnliche Kerne sind.

11. Verfahren nach einem der Ansprüche 1 bis 10,
dadurch gekennzeichnet,
daß zwei verschiedene Fleischsorten im Verhältnis von 1 : 2 zueinander beigemischt werden.

12. Verfahren nach einem der Ansprüche 1 bis 11,
dadurch gekennzeichnet,
daß der Antrocknungsvorgang ein bis zwei Tage bei Kühlhausluft von 6 bis 8° C dauert.

13. Verfahren nach einem der Ansprüche 1 bis 12,
dadurch gekennzeichnet,
daß die Gesamtmasse in verzehrbare Hüllen abgefüllt wird. und die so entstandenen Würstchen vor dem Antrocknungsvorgang abgebrüht werden.

14. Verfahren nach Anspruch 13,
dadurch gekennzeichnet,
daß die fertigen Würstchen einzeln vakuumverpackt werden.

15. Verfahren nach einem der Ansprüche 1 bis 12,
dadurch gekennzeichnet,
daß die Masse in einzelne Röllchen portioniert wird, die nach dem Räuchern vakuumverpackt werden.
